(19) Europäisches Patentamt / European Patent Office / Office européen des brevets

(11) **EP 4 432 154 A1**

(12) **EUROPEAN PATENT APPLICATION**
published in accordance with Art. 153(4) EPC

(43) Date of publication:
**18.09.2024 Bulletin 2024/38**

(21) Application number: **22890042.9**

(22) Date of filing: **04.11.2022**

(51) International Patent Classification (IPC):
**G06F 30/20** (2020.01)     **G01N 25/18** (2006.01)
**G06F 30/10** (2020.01)     **H01L 23/12** (2006.01)
**H01L 23/36** (2006.01)     **G06F 119/08** (2020.01)

(52) Cooperative Patent Classification (CPC):
**G06F 30/20; G01N 25/18; G06F 30/10;**
**G06F 30/367; H01L 23/12;** G06F 2119/08

(86) International application number:
**PCT/JP2022/041272**

(87) International publication number:
**WO 2023/080222 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2021 JP 2021181661**

(71) Applicant: **Resonac Corporation
Tokyo 105-7325 (JP)**

(72) Inventors:
• **KURAHASHI, Shunsuke
Tokyo 105-8518 (JP)**
• **OKUNO, Yoshishige
Tokyo 105-8518 (JP)**

(74) Representative: **Mewburn Ellis LLP
Aurora Building
Counterslip
Bristol BS1 6BX (GB)**

(54) **PROGRAM, PROPOSAL DEVICE, AND PROPOSAL METHOD**

(57)     A heating element configuration that can maintain heat dissipation performance when a configuration of a thermally conductive member is changed is proposed. A proposal device includes a reference performance calculation unit that calculates heat dissipation performance based on a reference model representing a configuration of a semiconductor device with a multi-layered thermally conductive member includes a heating element; a comparative performance calculation unit that calculates heat dissipation performance based on a comparative model in which a configuration of the thermally conductive member of the reference model is changed; a proposed configuration generation unit that generates a proposed model in which a configuration of the heating element of the comparative model is changed such that the heat dissipation performance based on the comparative model is equivalent to the heat dissipation performance based on the reference model; and a result output unit that outputs information based on the proposed model.

FIG.4

**EP 4 432 154 A1**

## Description

TECHNICAL FIELD

The present invention relates to programs, proposal devices, and proposal methods.

BACKGROUND ART

In regard to semiconductor devices such as power modules that have high heat generation, there is a demand to reduce costs while ensuring heat dissipation performance. As the costs of heating element materials are particularly high for power modules, reducing the size of the heating element can be beneficial to the cost of the overall product. However, since reducing the size of the power module can increase the heat density, there is a need to have a higher heat dissipation performance.

There is a technique for calculating the junction temperature and the temperature of each member of a semiconductor device by inputting the member configuration of the semiconductor device. For example, Non-Patent Document 1 discloses an analytical solution for calculating the thermal resistance of a power module that has a structure in which same-sized components are stacked in a planar direction.

RELATED-ART DOCUMENTS

NON-PATENT DOCUMENTS

[Non-Patent Document 1] K. R. Choudhury, D. J. Rogers, "Transient Thermal Modeling of a Power Module: An N-Layer Fourier Approach", IEEE Transactions on Power Electronics, vol. 34, no. 2, pp. 1500-1508, 2019.

SUMMARY OF THE INVENTION

PROBLEM TO BE SOLVED BY THE INVENTION

However, in the related-art, it can be difficult to determine what benefits can be obtained from changing the configuration of the members of the semiconductor device.

The disclosure aims to enable proposal of a heating element configuration that can maintain the heat dissipation performance when the configuration of a thermally conductive member is changed.

MEANS OF SOLVING THE PROBLEM

The disclosure includes the following configurations.

[1] A program for causing a computer to execute procedures including

a reference performance calculation procedure to calculate heat dissipation performance based on a reference model that represents a configuration of a semiconductor device in which a multi-layered thermally conductive member includes a heating element;

a comparative performance calculation procedure to calculate heat dissipation performance based on a comparative model in which a configuration related to the thermally conductive member of the reference model has been changed;

a proposed configuration generation procedure to generate a proposed model in which a configuration related to the heating element of the comparative model is changed such that the heat dissipation performance based on the comparative model is equivalent to the heat dissipation performance based on the reference model; and

a result output procedure to output information based on the proposed model.

[2] The program as described in [1], wherein the configuration of the semiconductor device includes dimensions, a material, and a position of the heating element and dimensions, a material, and a position of each layer of the thermally conductive member.

[3] The program as described in [2], wherein in the proposed configuration generation procedure, the dimensions of the heating element of the comparative model are changed to generate the proposed model.

[4] The program as described in [3], wherein in the result output procedure, the dimensions of the heating element of the proposed model are output.

[5] The program as described in [3], wherein in the result output procedure, a cost of the semiconductor device calculated based on the proposed model is output.

[6] The program as described in [3], wherein the heat dissipation performance includes a thermal resistance,

wherein in the proposed configuration generation procedure, the proposed model is generated by repeatedly

fitting an equation relating a heating area to the thermal resistance, the fitting being performed using a thermal resistance before the dimensions of the heating element are changed in the comparative model and a thermal resistance after the dimensions of the heating element are changed in the comparative model,

using the fitted equation to calculate a heating area corresponding to the thermal resistance based on the reference model, and

changing, based on the heating area calculated using the equation, the dimensions of the heating element of the comparative model.

[7] The program as described in [6], wherein the equation is expressed by

$$\log(R_{th}) = a + b*\log(S)$$

where $R_{th}$ is the thermal resistance, S is the heating area, and a and b are fitting parameters.

[8] The program as described in [7], wherein in the result output procedure, the thermal resistance based on the reference model, the thermal resistance in the comparative model, and the thermal resistance based on the proposed model are output together with the fitted equation.

[9] A proposal device that includes

a reference performance calculation unit configured to calculate heat dissipation performance based on a reference model that represents a configuration of a semiconductor device in which a multi-layered thermally conductive member includes a heating element;

a comparative performance calculation unit configured to calculate heat dissipation performance based on a comparative model in which a configuration related to the thermally conductive member of the reference model has been changed;

a proposed configuration generation unit configured to generate a proposed model in which a configuration related to the heating element of the comparative model is changed such that the heat dissipation performance based on the comparative model is equivalent to the heat dissipation performance based on the reference model; and

a result output unit configured to output information based on the proposed model.

[10] A computer-implemented proposal method including:

a reference performance calculation procedure to calculate heat dissipation performance based on a reference model that represents a configuration of a semiconductor device in which a multi-layered thermally conductive member includes a heating element;

a comparative performance calculation procedure to calculate heat dissipation performance based on a comparative model in which a configuration related to the thermally conductive member of the reference model has been changed;

a proposed configuration generation procedure to generate a proposed model in which a configuration related to the heating element of the comparative model is changed such that the heat dissipation performance based on the comparative model is equivalent to the heat dissipation performance based on the reference model; and

a result output procedure to output information based on the proposed model.

EFFECTS OF THE INVENTION

According to the disclosure, it is possible to propose a heating element configuration that can maintain heat dissipation performance when a configuration of a thermally conductive member is changed.

BRIEF DESCRIPTION OF THE DRAWINGS

[FIG. 1] FIG. 1 is a block diagram illustrating an example of the overall configuration of a proposal system according to the first embodiment;

[FIG. 2] FIG. 2 is a block diagram illustrating an example of the hardware configuration of a computer according to the first embodiment;

[FIG. 3] FIG. 3 is a block diagram illustrating an example of the functional configuration of a proposal system according to the first embodiment;

[FIG. 4] FIG. 4 is a block diagram illustrating another example of the functional configuration of the proposal system according to the first embodiment;

[FIG. 5] FIG. 5 is a flowchart illustrating an example of the processing procedures of the proposal system according to the first embodiment;

[FIG. 6] FIG. 6 is a view illustrating an example of a proposal screen when the dimensions of a thermal conductive member are changed;

[FIG. 7] FIG. 7 is a plan view illustrating an example of a reference model;

[FIG. 8] FIG. 8 is a cross-sectional view illustrating an example of the reference model;

[FIG. 9] FIG. 9 is a cross-sectional view illustrating an example of a comparative model in which the dimensions of the thermally conductive member have been changed;

[FIG. 10] FIG. 10 is a cross-sectional view illustrating an example of the comparative model in which the materials of the thermally conductive member have been changed;

[FIG. 11] FIG. 11 is a view illustrating an example of the proposal screen when the materials of the thermally conductive member are changed;

[FIG. 12] FIG. 12 is a view illustrating a first example of a member information table;

[FIG. 13] FIG. 13 is a view illustrating a second example of the member information table;

[FIG. 14] FIG. 14 is a view illustrating a third example of the member information table;

[FIG. 15] FIG. 15 is a flowchart illustrating an example of the processing procedure of a proposed configuration unit according to the second embodiment;

[FIG. 16] FIG. 16 is a view illustrating the reference model used for analysis;

[FIG. 17] FIG. 17(A) is a table illustrating the results of analysis using heating elements that have an aspect ratio of 1:1, and FIG. 17(B) is a graph illustrating an equation fitted using the results of the analysis of FIG. 17(A);

[FIG. 18] FIG. 18(A) is a table illustrating the results of analysis using heating elements that have an aspect ratio of 1:2, and FIG. 18(B) is a graph illustrating an equation fitted using the results of the analysis of FIG. 18(A); and

[FIG. 19] FIG. 19(A) is a table illustrating the results of a search efficiency analysis based on a bisection method, and FIG. 19(B) is a table illustrating the results of the search efficiency analysis by the proposed configuration generation unit according to the second embodiment.

MODE OF CARRYING OUT THE INVENTION

The embodiments of the present invention will be described hereinafter with reference to the accompanying drawings. Note that same reference numerals denote components having substantially the same functional configurations, and a repetitive description thereof will be omitted.

[First Embodiment]

The first embodiment of the present invention is a proposal system. The proposal system receives, as inputs, a semiconductor device configuration that serves as a reference (to be also referred to as a "reference model" hereinafter) and a semiconductor device configuration in which a portion of the reference model has been changed (to be also referred to as a "comparative model" hereinafter), and outputs information (to be also referred to as "proposed information" hereinafter) based on a semiconductor device configuration in which another portion of the comparative model is changed (to be also referred to as a "proposed model" hereinafter) so as to have heat dissipation performance equivalent to the heat dissipation performance of the reference model. The embodiment is applicable to a semiconductor device in which a multi-layered thermally conductive member includes a heating element. A power module is one example of such a semiconductor device.

The comparative model according to the embodiment is a model in which the configuration (for example, the dimensions, the material, or the layout) of the thermally conductive member has been changed from the configuration of the thermally conductive member of the reference model. The proposed model according to the embodiment is a model in which the configuration (for example, the dimensions, the material, and the layout) of the heating element of the comparative model has been changed. That is, the proposal system according to the embodiment is a system that proposes the configuration for a heating element that can maintain the heat dissipation performance when the configuration of the thermally conductive member of the reference model is changed.

<Overall Configuration of Proposal System>

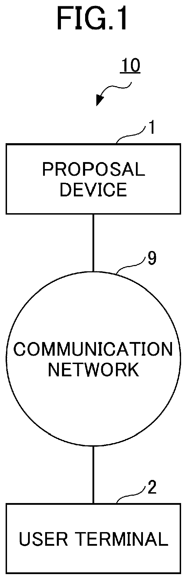

The overall configuration of the proposal system according to the embodiment will be described. FIG. 1 is a block diagram illustrating an example of the overall configuration of the proposal system according to the embodiment.

As illustrated in FIG. 1, a proposal system 10 according to the embodiment includes a proposal device 1 and a user terminal 2. The proposal device 1 and the user terminal 2 are connected together via a communication network 9 such as a local area network (LAN), the Internet, or the like to be able to perform data communication with each other.

The user terminal 2 is an information processing terminal, for example, a personal computer (PC), a tablet terminal, a smartphone, or the like that is operated by a user. The user terminal 2 receives the reference model and the comparative model as inputs and transmits the reference model and the comparative model to the proposal device 1 in accordance with the operation by the user. The user terminal 2 receives the proposed information from the proposal device 1 and outputs the proposed information to the user.

The proposal device 1 is an information processing apparatus such as a PC, a work station, or a server that generates a proposed model based on the reference model and the comparative model received from the user terminal 2. The proposal device 1 generates proposed information based on the proposed model, and transmits the proposed information to the user terminal 2.

Note that the overall system configuration of the proposal system 10 illustrated in FIG. 1 is merely an example, and the system configuration can be implemented in various manners in accordance with the use and the purpose. For example, the proposal device 1 may be implemented by a plurality of computers or may be implemented as a cloud computing service. Also, for example, the proposal system 10 may be implemented by a stand-alone computer that has functions of the proposal device 1 and the user terminal 2.

<Hardware Configuration of Proposal System>

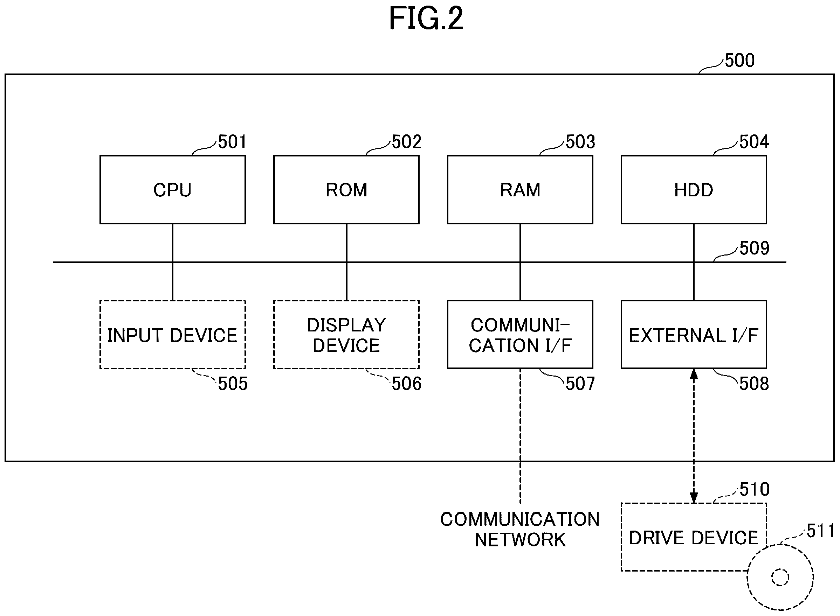

The hardware configuration of the proposal system 10 according to the embodiment will be described next. The proposal device 1 and the user terminal 2 according to the embodiment each are implemented by, for example, a computer. FIG. 2 is a block diagram illustrating an example of the hardware configuration of a computer 500 according to the embodiment.

As illustrated in FIG. 2, the computer 500 includes a central processing unit (CPU) 501, a read only memory (ROM) 502, and a random access memory (RAM) 503. The CPU 501, the ROM 502, and the RAM 503 form what is known in the art as a computer.

The computer 500 includes an hard disk drive (HDD) 504, an input device 505, a display device 506, a communication interface (I/F) 507, and an external I/F 508. These hardware components of the computer 500 are connected to each other via a bus line 509. Note that input device 505 and the display device 506 may be connected to the external I/F 508 so as to be used through the external I/F 508.

The CPU 501 is an arithmetic processing device that can control and implement the functions of the computer 500 overall by loading programs and data onto the RAM 503 from a storage device, such as the ROM 502, the HDD 504, or the like, and executing processing.

The ROM 502 is an example of a nonvolatile semiconductor memory (storage device) that can hold programs and data even when the power is turned off. The ROM 502 functions as a main storage device that stores various programs, data, and the like for the CPU 501 to execute the various programs installed in the HDD 504. More specifically, the ROM 502 stores a startup program such as the basic input/output system (BIOS), extensible firmware interface (EFI), or the like executed at the activation of the computer 500 and data of operating system (OS) settings, network settings, and the like.

The RAM 503 is an example of a volatile semiconductor memory (storage device) in which programs and data are erased when power is turned off. The RAM 503 may be, for example, a dynamic random access memory (DRAM), a static random access memory (SRAM), or the like. The RAM 503 provides a work area to which various programs installed in the HDD 504 are loaded when these programs are executed by the CPU 501.

The HDD 504 is an example of a nonvolatile storage device that stores programs and data. The programs and data stored in the HDD 504 include, for example, an OS that is the basic software for controlling the whole computer 500, applications that provide various functions on the OS, and the like. Note that the computer 500 may use, instead of the HDD 504, a storage device (for example, a solid state drive [SSD] or the like) that uses a flash memory as a storage medium.

The input device 505 is a device used by the user to input various signals, for example, a touch panel, operation keys and buttons, a keyboard, a mouse, a microphone for inputting audio data such as sounds, or the like.

The display device 506 is formed by, for example, a display such as a liquid-crystal display or an organic electroluminescent (EL) display that displays screens, a speaker that outputs audio data such as sound, and the like.

The communication I/F 507 is, for example, an interface to allow the computer 500 to execute data communication by connecting the computer 500 to a communication network.

The external I/F 508 is, for example, an interface with an external device. The external device may be a drive device 510 or the like.

The drive device 510 is a device into which a recording medium 511 is inserted. The recording medium 511 mentioned here includes a medium that optically, electrically, or magnetically records information such as a CD-ROM, a flexible disk, a magneto-optical disk, or the like. The recording medium 511 may also include a semiconductor memory that records information electrically such as a ROM, a flash memory, or the like. The computer 500 can, therefore, at least read from or write on the recording medium 511 via the external I/F 508.

Note that the various programs to be installed in the HDD 504 are installed by, for example, setting the distributed recording medium 511 in the drive device 510 that is connected to the external I/F 508 and causing the drive device 510 to read the various programs recorded in the recording medium 511. Alternatively, the various programs to be installed in the HDD 504 are installed by, for example, downloading the programs from a network different from the communication network through the communication I/F 507.

<Functional Configuration of Proposal System>

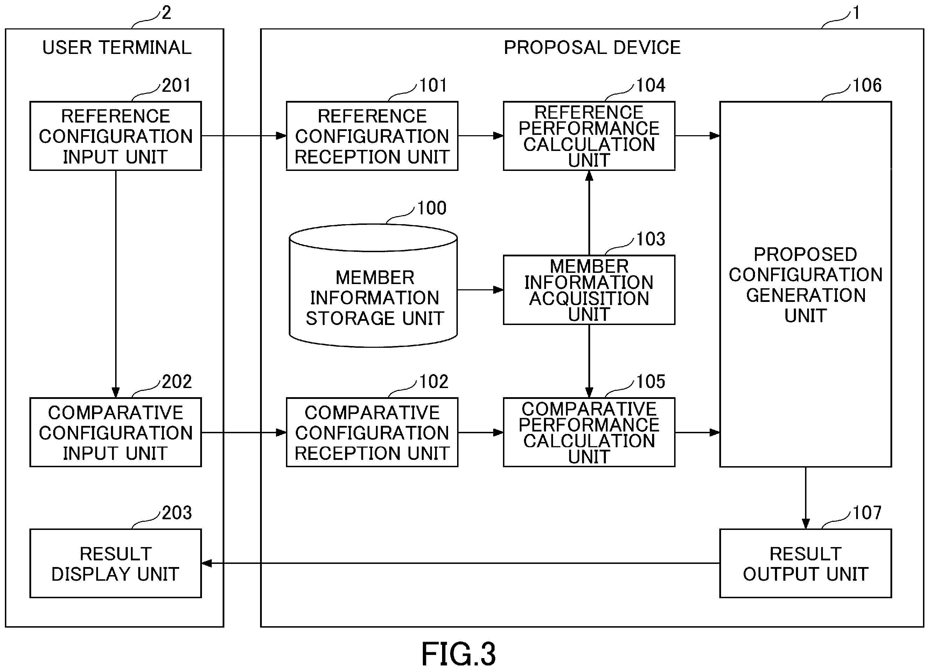

The functional configuration of the proposal system according to the embodiment will be described next. FIG. 3 is a block diagram illustrating an example of the functional configuration of the proposal system 10 according to the embodiment.

<<Functional Configuration of User Terminal 2>>

As illustrated in FIG. 3, the user terminal 2 according to the embodiment includes a reference configuration input unit 201, a comparative configuration input unit 202, and a result display unit 203.

The reference configuration input unit 201, the comparative configuration input unit 202, and the result display unit 203 included in the user terminal 2 are implemented by processes executed by the CPU 501 when programs are loaded from the HDD 504 to the RAM 503 illustrated in FIG. 2.

The reference configuration input unit 201 receives the reference model that is input in accordance with the user's operation on the input device 505. The reference configuration input unit 201 also transmits the input reference model to the proposal device 1. The reference model according to the embodiment includes information to specify the dimensions, the material, and the layout of the heating element; and the dimensions, the material, and the layout of the respective layers of the thermally conductive member.

The comparative configuration input unit 202 receives the comparative model input in accordance with the user's operation on the input device 505. The comparative configuration input unit 202 also transmits the input comparative model to the proposal device 1. The comparative model according to the embodiment is a model obtained by changing the information about the dimensions, the material, or the layout of the respective layers of the thermally conductive member included in the reference model, or any combination thereof.

The result display unit 203 receives the proposed information transmitted from the proposal device 1. The result display unit 203 also causes the display device 506 or the like to output the received proposed information. The proposed information according to the embodiment includes the dimensions of the heating element of the proposed model and the heat dissipation performance based on the proposed model.

<<Functional Configuration of Proposal Device 1»

As illustrated in FIG. 3, the proposal device 1 according to the embodiment includes a member information storage unit 100, a reference configuration reception unit 101, a comparative configuration reception unit 102, a member information acquisition unit 103, a reference performance calculation unit 104, a comparative performance calculation unit 105, a proposed configuration generation unit 106, and a result output unit 107.

The reference configuration reception unit 101, the comparative configuration reception unit 102, the member information acquisition unit 103, the reference performance calculation unit 104, the comparative performance calculation unit 105, the proposed configuration generation unit 106, and the result output unit 107 included in the proposal device 1 are implemented by processes executed by the CPU 501 when programs are loaded from the HDD 504 to the RAM 503 illustrated in FIG. 2.

The member information storage unit 100 included in the proposal device 1 may have a function or may be a functional unit implemented by reading data from or writing data to the HDD 504 illustrated in FIG. 2.

The member information storage unit 100 stores information (to be also referred to as "member information" hereinafter) related to members used in the heating element and the respective layers of the thermally conductive member of the semiconductor device. The member information is stored in a member information table stored in the member information storage unit 100.

The reference configuration reception unit 101 receives the reference model transmitted from the user terminal 2. The reference configuration reception unit 101 inputs the received reference model into the reference performance calculation unit 104.

The comparative configuration reception unit 102 receives the comparative model transmitted from the user terminal 2. The comparative configuration reception unit 102 also inputs the received comparative model into the comparative performance calculation unit 105.

The member information acquisition unit 103 reads the member information from the member information storage unit 100 and inputs the member information to the reference performance calculation unit 104 and the comparative performance calculation unit 105.

The reference performance calculation unit 104 uses the member information received from the member information acquisition unit 103 to calculate the heat dissipation performance (to be also referred to as "reference performance") based on the reference model. The reference performance calculation unit 104 inputs the calculated reference performance to the proposed configuration generation unit 106.

The comparative performance calculation unit 105 uses the member information received from the member information acquisition unit 103 to calculate the heat dissipation performance (to be also referred to as "comparative performance" hereinafter) based on the comparative model. The comparative performance calculation unit 105 also inputs the calculated comparative performance to the proposed configuration generation unit 106.

The proposed configuration generation unit 106 generates a proposed model in which a configuration related to the heating element of the comparative model has been changed so that the heat dissipation performance is equivalent to the heat dissipation performance of the reference performance. The proposed configuration generation unit 106 also inputs the generated proposed model to the result output unit 107.

The result output unit 107 generates the proposed information based on the proposed model received from the proposed configuration generation unit 106. The result output unit 107 also transmits the generated proposed information to the user terminal 2.

<<Functional Configuration of Proposal Device 1 Having Stand-Alone Structure>>

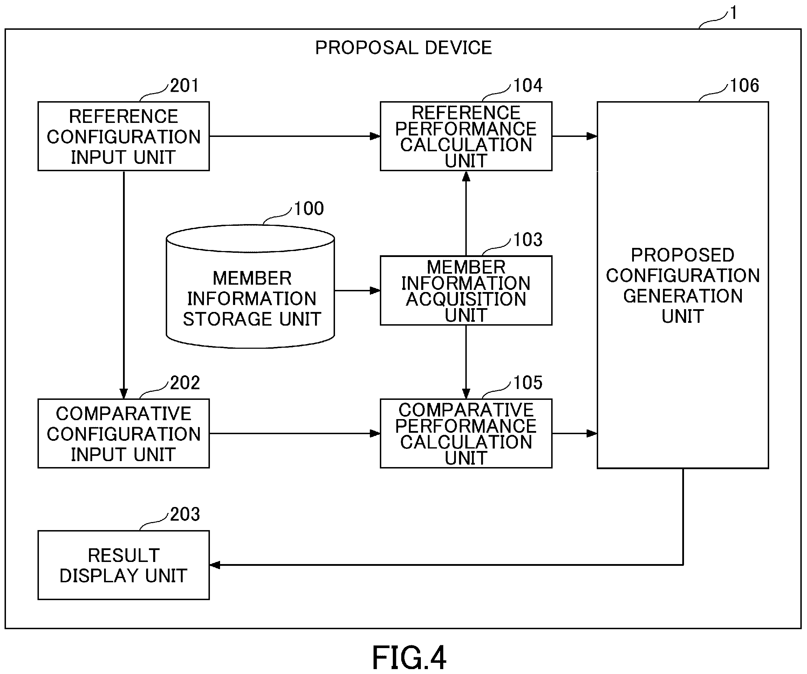

As described above, the proposal system 10 may be implemented by a stand-alone computer. FIG. 4 is a block diagram illustrating an example of the functional configuration of the proposal system 10 that has a stand-alone structure.

As illustrated in FIG. 4, the proposal device 1 that has the stand-alone structure does not include the reference configuration reception unit 101, the comparative configuration reception unit 102, and the result output unit 107. Instead, the proposal device 1 may include the reference configuration input unit 201, the comparative configuration input unit 202, and the result display unit 203.

<Processing Procedure of Proposal Method>

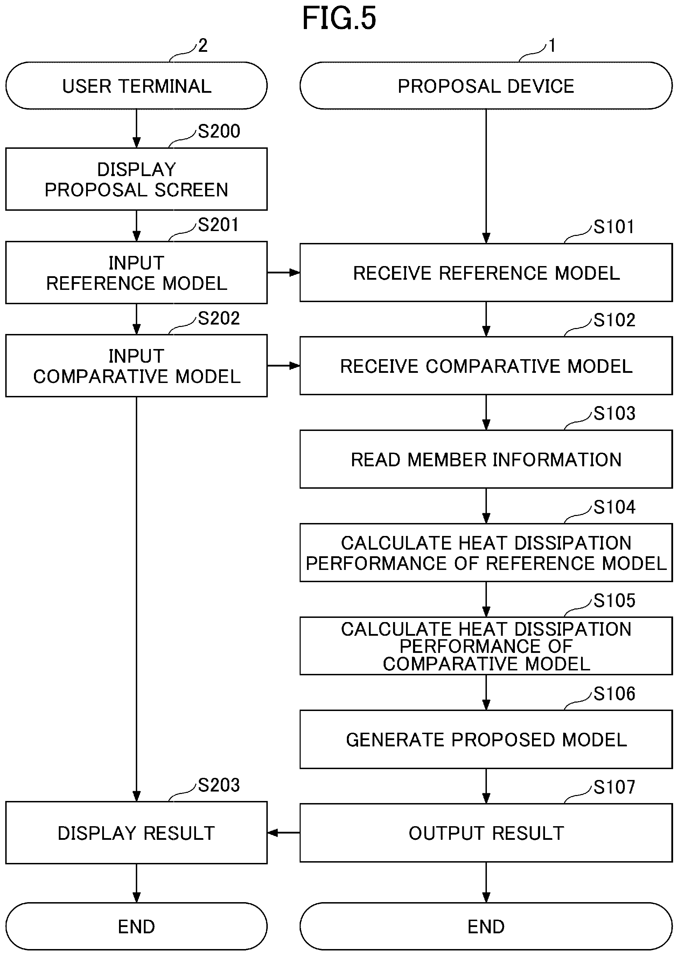

The processing procedure of the proposal method executed by the proposal system according to the embodiment will be described next. FIG. 5 is a flowchart illustrating an example of the processing procedure of the proposal method according to the embodiment.

In step S200, the user terminal 2 causes the display device 506 to display a proposal screen in accordance with the user's operation to activate the proposal screen. The proposal screen according to the embodiment is a screen by which the reference model and the comparative model input by the user can be transmitted to the proposal device 1, and the proposed information received from the proposal device 1 can be displayed.

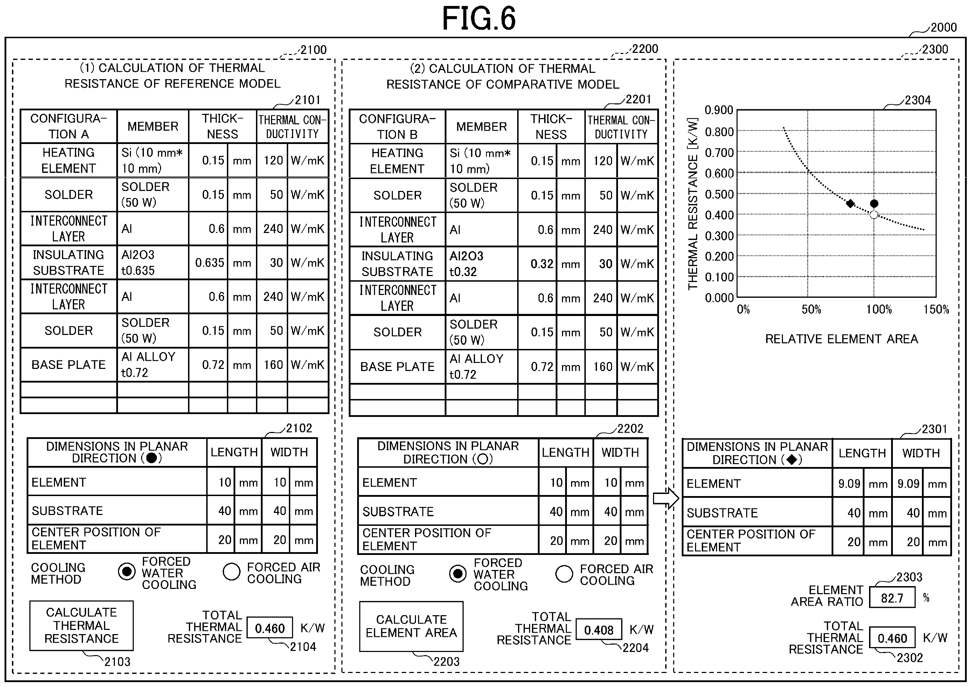

FIG. 6 illustrates an example of the proposal screen according to the embodiment. As illustrated in FIG. 6, a proposal screen 2000 according to the embodiment includes a reference model operation unit 2100, a comparative model operation unit 2200, and a proposed information display unit 2300.

The reference model operation unit 2100 is a screen area where information related to the reference model can be input and displayed. The reference model operation unit 2100 includes a reference configuration input field 2101, a reference dimensions input field 2102, a thermal resistance calculation button 2103, and a reference performance display field 2104.

The comparative model operation unit 2200 is a screen area where information related to the comparative model can be input and displayed. The comparative model operation unit 2200 includes a comparative configuration input field 2201, a comparative dimensions input field 2202, an element area calculation button 2203, and a comparative performance display field 2204.

The reference model operation unit 2100 and the comparative model operation unit 2200 may each be provided with an input field for inputting the cooling method (forced water cooling or forced air cooling). Also, the reference model operation unit 2100 and the comparative model operation unit 2200 may each be provided with an input field for inputting information used to calculate the heat dissipation performance. The information used to calculate the heat dissipation performance includes, for example, the ambient environmental temperature of the semiconductor device, the heating value of the semiconductor element, and the heat transfer coefficient of the bottom surface of the semiconductor device, and the like. Note that, in lieu of providing the input field, the heating value of the semiconductor element may be calculated from the current value.

The proposed information display unit 2300 is a screen area where the proposed information received from the proposal device 1 is displayed. The proposed information display unit 2300 includes a proposed dimensions display field 2301, a proposed performance display field 2302, an area ratio display field 2303, and a graph display field 2304.

The description will return to FIG. 5. In step S201, the reference configuration input unit 201 of the user terminal 2 receives the reference model that the user inputs through the reference configuration input field 2101 and the reference dimensions input field 2102 in the proposal screen 2000.

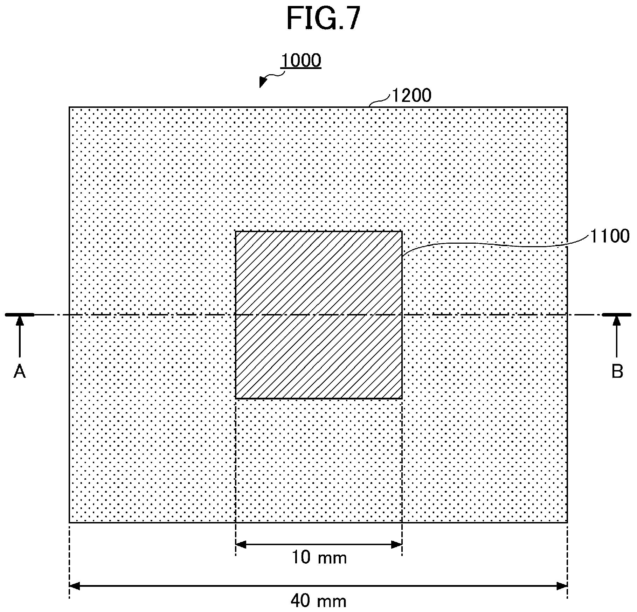

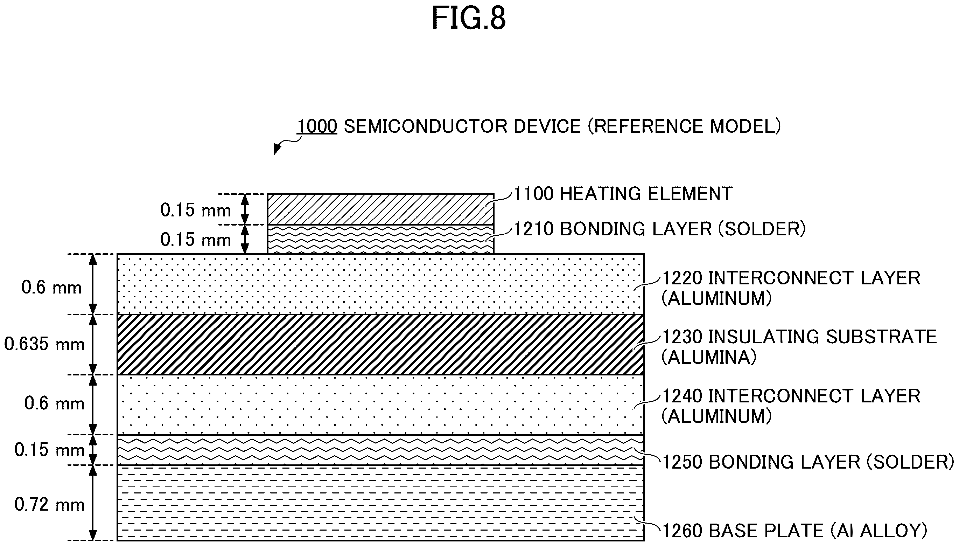

The semiconductor device according to the embodiment will be described hereinafter. FIG. 7 is a plan view illustrating an example of the semiconductor device according to the embodiment. FIG. 8 is a cross-sectional view that is taken along a line A - B of FIG. 7 and illustrates an example of the semiconductor device according to the embodiment.

As illustrated in FIG. 7, a heating element 1100 is provided in the center of a thermally conductive member 1200 of a semiconductor device 1000 according to the embodiment. One or more heating elements 1100 may be provided in the thermally conductive member 1200. The heating element 1100 may be provided in the center of or in the vicinity of the peripheral edge of the thermally conductive member 1200.

As illustrated in FIG. 8, the thermally conductive member 1200 is formed by stacking a bonding layer 1210, an interconnect layer 1220, an insulating substrate 1230, an interconnect layer 1240, a bonding layer 1250, and a base plate 1260. Note that a heat sink may be used instead of the base plate 1260.

The bonding layer 1210 is formed to have the same dimensions as the heating element 1100, and bonds the heating element 1100 and the interconnect layer 1220 together. The interconnect layer 1220, the insulating substrate 1230, the interconnect layer 1240, the bonding layer 1250, and the base plate 1260 are formed to have the same length and width dimensions, and can be formed to have any thickness within a range allowed by the material.

In the following description, the user has input the reference model based on the semiconductor device 1000 illustrated in FIGS. 7 and 8. As illustrated in FIG. 7, in the reference model 1000 according to the embodiment, the heating element 1100 is 10 mm in length and width and the thermally conductive member is 40 mm in length and width. Further, the heating element 1100 is provided in the center of the thermally conductive member.

As illustrated in FIG. 8, the bonding layer 1210 and the bonding layer 1250 are each made of solder and have a thickness of 0.15 mm. The interconnect layer 1220 and the interconnect layer 1240 are each made of aluminum (Al) and have a thickness of 0.6 mm. The insulating substrate 1230 is made of alumina ($Al_2O_3$) and has a thickness of 0.635 mm. The base plate 1260 is made of an aluminum alloy and has a thickness of 0.72 mm.

The configuration of the semiconductor device 1000 illustrated in FIGS. 7 and 8 has been input to the reference model operation unit 2100 of the proposal screen 2000 illustrated FIG. 6. A method in which the user directly inputs the configuration or a method in which the user selects the configuration from a drop-down list may be employed as the method to input the configuration of each layer to the reference configuration input field 2101 of the reference model operation unit 2100. In a case where a drop-down list is employed, a list of members can be acquired from the member information storage unit 100 (to be described later) and be presented as options. In a case where the user is to directly input the configuration, the user may input a product number for identifying a member, the information about the member identified based on the product number may be acquired from the member information storage unit 100, and the acquired information may be supplemented accordingly.

When the user presses the thermal resistance calculation button 2103 in the reference model operation unit 2100, a thermal resistance is calculated based on the reference model input through the reference configuration input field 2101 and the reference dimensions input field 2102, and the calculation result is displayed on the reference performance display field 2104. The reference performance calculation unit 104 calculates the thermal resistance based on the reference model.

In step S202, the comparative configuration input unit 202 of the user terminal 2 receives the comparative model that the user inputs to the comparative model operation unit 2200 in the proposal screen 2000.

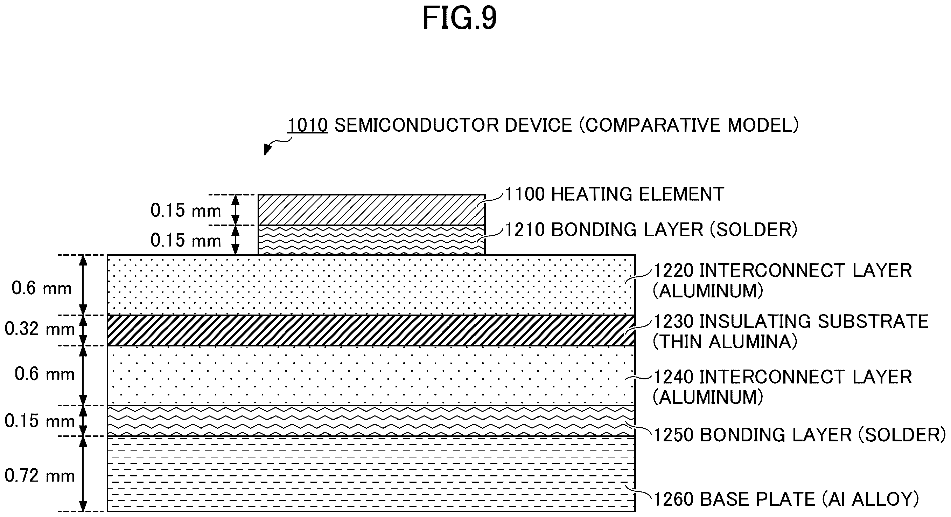

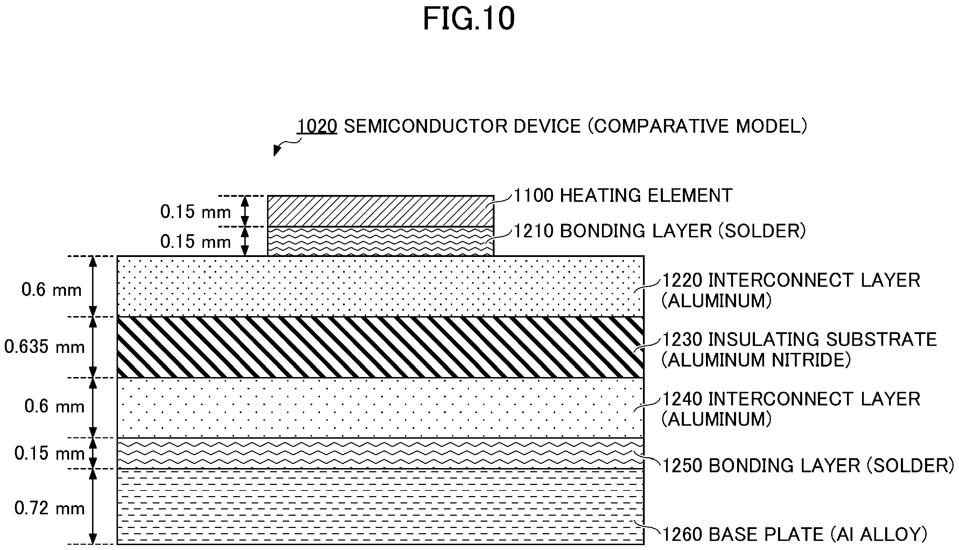

The comparative model according to the embodiment will be described. FIG. 9 is a cross-sectional view illustrating an example of the comparative model in which the dimensions of the thermally conductive member have been changed. FIG. 10 is a cross-sectional view illustrating an example of the comparative model in which the materials of the thermally conductive member have been changed.

As illustrated in FIG. 9, in a comparative model 1010 in which the dimensions of the thermally conductive member have been changed, the thickness of the insulating substrate 1230 has been changed from 0.635 mm to 0.32 mm as compared with the reference model 1000. In this manner, the comparative model can be a model in which the thickness of one of the layers of the thermally conductive member has been changed.

As illustrated in FIG. 10, in a comparative model 1020 in which the materials of the thermally conductive member have been changed, the material of the insulating substrate 1230 has been changed from aluminum to aluminum nitride (AlN) as compared with the reference model 1000. In this manner, the comparative model can be a model in which the material of one of the layers of the thermally conductive member has been changed.

The comparative model may be a model in which the thickness and the material of one of the layers of the thermally conductive member have been changed. Alternatively, the comparative model may be a model in which at least the thickness or the material of two or more layers of the thermally conductive member has been changed. Further, the comparative model may be a model in which the layout of the thermally conductive member has been changed. Note that the layout of the thermally conductive member may be the order of the layers of the thermally conductive member. The change in the layout of the thermally conductive member may be the addition or the deletion of a layer in the thermally conductive member.

The configuration of the semiconductor device 1010 illustrated in FIG. 9 has been input to the comparative model operation unit 2200 of the proposal screen 2000 illustrated in FIG. 6. Initially, the respective configurations of the layers of the reference model input to the reference configuration input field 2101 are displayed in the comparative configuration input field 2201 of the comparative model operation unit 2200. The user can change the configuration of any layer of the thermally conductive member in the comparative configuration input field 2201. The same method used to input the respective configurations of the layers in the reference configuration input field 2101 can be used as the method to change the respective configurations of the layers in the comparative configuration input field 2201.

When the user changes the respective configurations of the layers in the comparative configuration input field 2201, a thermal resistance is calculated based on the comparative model input to the comparative configuration input field 2201 and the comparative dimensions input field 2202, and the calculation result is displayed in the comparative performance display field 2204. The comparative performance calculation unit 105 calculates the thermal resistance based on the comparative model.

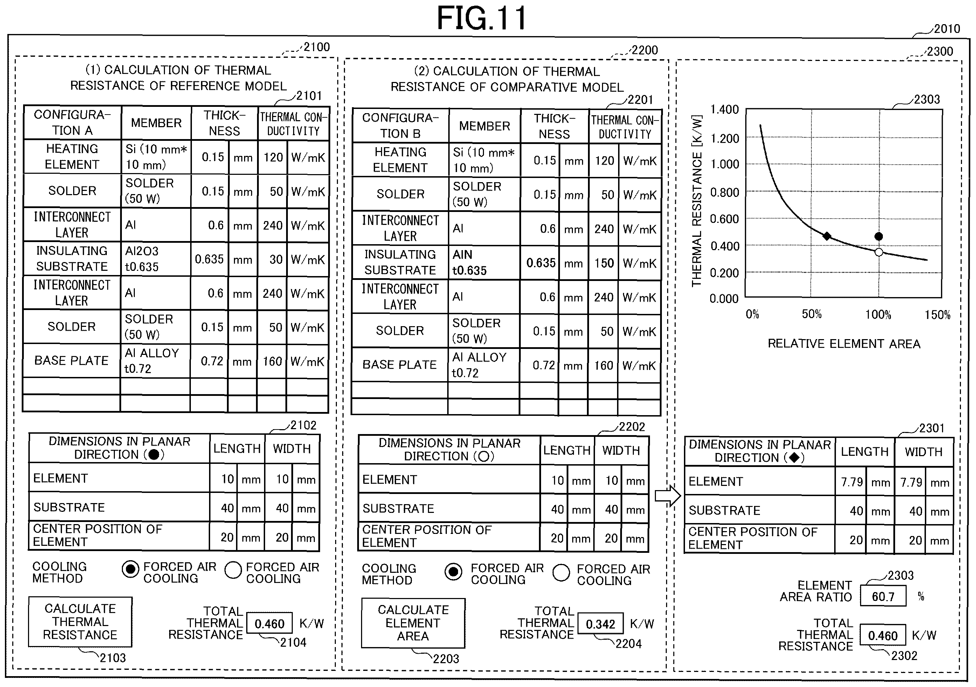

FIG. 11 is a view illustrating an example of a proposal screen 2010 in which the configuration of the comparative model 1020 illustrated in FIG. 10 has been input to the comparative model operation unit 2200.

When the user presses the element area calculation button 2203 in the comparative model operation unit 2200, the reference configuration input unit 201 transmits the reference model that was input to the reference model operation unit 2100 to the proposal device 1. At the same time, the comparative configuration input unit 202 transmits the comparative model that was input to the comparative model operation unit 2200 to the proposal device 1.

The description will return to FIG. 5. In step S101, the reference configuration reception unit 101 of the proposal device 1 receives the reference model transmitted from the user terminal 2. Further, the reference configuration reception unit 101 inputs the reference model received from the user terminal 2 to the reference performance calculation unit 104.

In step S102, the comparative configuration reception unit 102 of the proposal device 1 receives the comparative model from the user terminal 2. Further, the comparative configuration reception unit 102 inputs the comparative model received from the user terminal 2 to the comparative performance calculation unit 105.

In step S103, the member information acquisition unit 103 of the proposal device 1 reads the member information stored in the member information table from the member information storage unit 100. The member information acquisition unit 103 inputs the member information read from the member information storage unit 100 to the reference performance calculation unit 104 and the comparative performance calculation unit 105.

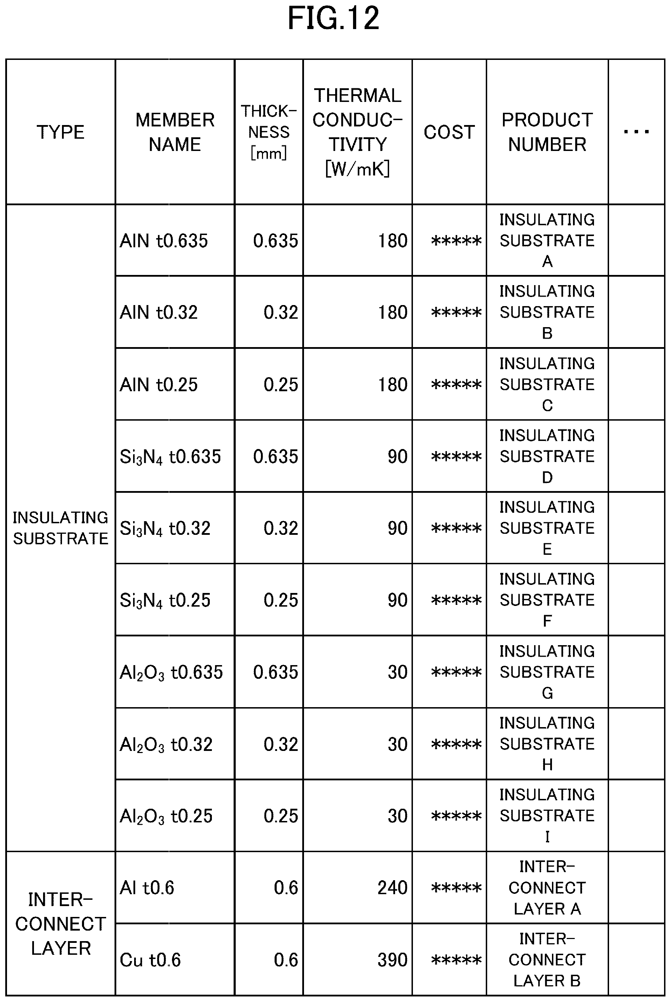

The member information table stored in the member information storage unit 100 will be described hereinafter. FIGS. 12 to 14 are views illustrating examples of the member information table according to the embodiment. As illustrated in FIG. 12, an example of the member information table according to the embodiment includes, as data items, "type", "member name", "thickness", "thermal conductivity", "cost", and "product number".

"Type" is information indicating the layer of thermally conductive member in which the member can be used. "Member name" is the name of the member. "Thickness" is information indicating the thickness of the member. "Thermal conductivity" is information indicating the thermal conductivity of the member. "Cost" is information indicating the unit cost of the member. "Product number" is the identification information used to identify the member.

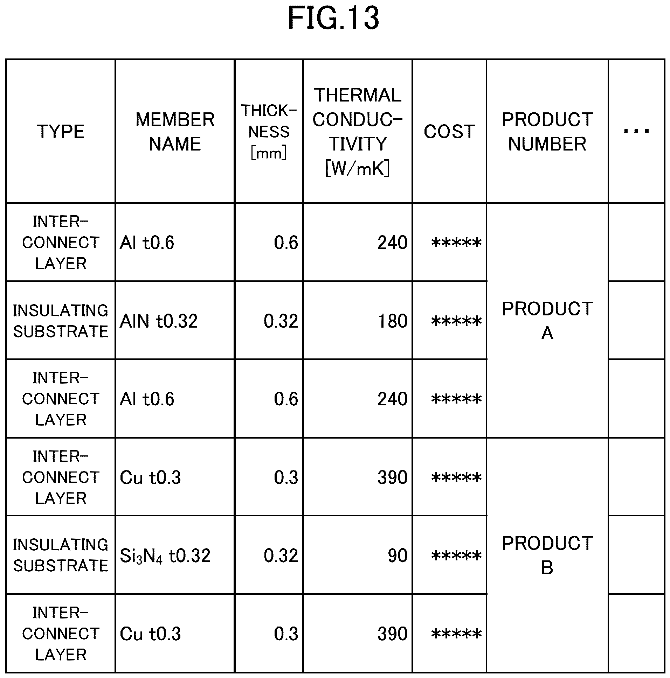

As illustrated in FIG. 13, the product number to be included in the member information table may be assigned to identify a product composed of a plurality of members. In the example of FIG. 13, each product is to be provided as a module in which an interconnect layer, an insulating substrate, and an interconnect layer are stacked.

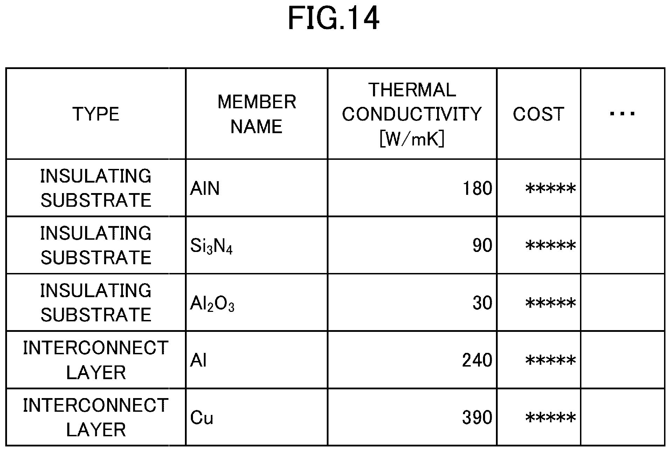

Alternatively, as illustrated in FIG. 14, the member information table may not include the information indicating the thickness. In this case, the user will need to input the thickness to the reference configuration input field 2101 or the comparative configuration input field 2201 of the proposal screen 2000.

The description will return to FIG. 5. In step S104, the reference performance calculation unit 104 of the proposal device 1 uses the member information received from the member information acquisition unit 103 to calculate the reference performance that is the heat dissipation performance based on the reference model. The heat dissipation performance according to the embodiment includes the thermal resistance and the maximum temperature at which the semiconductor element reaches equilibrium.

The maximum temperature is the value indicating the actual temperature (C°) that the semiconductor element reaches at equilibrium. The maximum temperature can be obtained as follows.

environmental temperature [K] + actual heating value [W] × thermal resistance [K/W]

The thermal resistance is a value indicating how much the temperature of the semiconductor element increases when the semiconductor element has a given heating value. The thermal resistance can be defined as follows. Let $R_{th}$ be the thermal resistance [K/W], T be the maximum temperature [C°] of the semiconductor element, $T_{ref}$ be the environmental temperature, and Q be the heating value [W] of the semiconductor element.

$$R_{th} = (T - T_{ref})/Q$$

The method of calculating the thermal resistance may be linked with an analysis using the finite element method or may use the maximum temperature of the heating element for which an analytical solution has been obtained in advance. The analytical solution for calculating the thermal resistance is described in, for example, Non-Patent Document 1.

In a case where a heat sink is used instead of the base plate, the thermal resistance may be calculated by setting a value obtained by multiplying the heat transfer coefficient by the effective area in consideration of the surface area of the heat sink. Note that the thermal transfer coefficient is a coefficient [W/m$^2$K] representing the ease of heat transfer between the heat sink and a cooling medium. The heat loss amount can be obtained as follows: the temperature difference from the surroundings × the surface area × the heat transfer coefficient.

In step S105, the comparative performance calculation unit 105 of the proposal device 1 uses the member information received from the member information acquisition unit 103 to calculate the comparative performance that is the heat dissipation performance based on the comparative model. The method used by the comparative performance calculation unit 105 to calculate the heat dissipation performance is the same as the method used by the reference performance calculation unit 104.

In step S106, the proposed configuration generation unit 106 of the proposal device 1 generates a proposed model in which the configuration related to the heating element of the comparative model is changed such that the comparative performance is equivalent to the reference performance. Furthermore, the proposed configuration generation unit 106 inputs the proposed model to the result output unit 107.

In a case where the semiconductor device includes a plurality of heating elements, a proposed model in which the configuration of one heating element of the plurality of heating elements has been changed may be generated, a proposed model in which the respective configurations of all of the plurality of heating elements have been changed may be generated, or a proposed model in which the respective configurations of some of the plurality of heating elements have been changed may be generated.

The proposed model according to the embodiment is a model in which the dimensions of the heating element included in the comparative model have been changed. Note that in a case where the dimensions of the heating element are to be changed, the length and width are multiplied by the same coefficient to change the area without changing the aspect ratio. This is because changing the aspect ratio of the heating element may change the form of heat dissipation even if the area is the same, and, thus, may change the thermal resistance.

In step S107, the result output unit 107 of the proposal device 1 generates the proposed information based on the proposed model received from the proposed configuration generation unit 106. Furthermore, the result output unit 107 transmits the proposed information to the user terminal 2.

The proposed information according to the embodiment includes the dimensions of the heating element of the proposed model and the heat dissipation performance based on the proposed model. The proposed information may also include the cost of the overall semiconductor device based on the proposed model. The cost of the overall semiconductor device can be obtained by acquiring the respective costs of the members included in the proposed model from the member information stored in the member information storage unit 100 and adding up the acquired costs of the members. Including the cost of the overall semiconductor device in the proposed information allows the user to ascertain firsthand the benefits to the cost when the configuration of the semiconductor device is changed to the configuration of the proposed model.

Furthermore, the proposed information may include at least the volume or the weight of the heating element of the proposed model. If at least the volume or the weight is included in the proposed information, it will be possible to make a more suitable proposal to the user in a case where the user desires a semiconductor device that has a small volume or light weight without any regard for cost.

In step S203, the result display unit 203 of the user terminal 2 receives the proposed information from the proposal device 1. Furthermore, the result display unit 203 causes the proposed information received from the proposal device 1 to be displayed on the proposal screen.

In the proposed information display unit 2300 of the proposal screen 2000 illustrated in FIG. 6, the dimensions of the heating element of the proposed model are displayed in the proposed dimensions display field 2301, the thermal resistance based on the proposed model is displayed in the proposed performance display field 2302, and the element area ratio is displayed in the area ratio display field 2303. Note that the element area ratio is the ratio of the area of the heating element in the reference model to the area of the heating element in the proposed model. The user can look at the element area ratio to intuitively understand how much the size of the heating element can be reduced.

In a case where the proposed information that is received from the proposal device 1 includes the dimensions of the heating element of the proposed model, the dimensions of the heating element may be converted into and output as discrete values. The product number of a member may be output by acquiring the product number from a table in which members and dimensions of the heating element have been associated with each other.

The user can design a semiconductor device (for example, a power module) based on the proposed information displayed on the proposal screen 2000. The user can manufacture the semiconductor device based on the design. A semiconductor device that is manufactured in this manner differs from the reference semiconductor device in the configuration of the heating element, but has the same heat dissipation performance.

<Effects of Embodiment>

The proposal device 1 according to the embodiment generates a proposed model in which the configuration of the heating element in a comparative model has been changed such that the heat dissipation performance of the comparative model, in which the configuration of the thermally conductive member has been changed from the configuration of the thermally conductive member of a reference model, is equivalent to the heat dissipation performance of the reference model representing the configuration of the reference semiconductor device. The proposal device 1 subsequently outputs information based on the proposed model. Hence, according to the embodiment, it is possible to propose a configuration for a heating element that can maintain the heat dissipation performance when the configuration of the thermally conductive member is changed.

Particularly, in the proposal device 1 according to the embodiment, since the heat dissipation performance can be calculated using, for example, the finite element method or the like, on a database of dimensions and thermal conductivities of members usable for the thermally conductive member, new experiments or simulations do not need to be performed. Therefore, according to the embodiment, it is possible to greatly reduce the time it takes to make a proposal for the configuration of the heating element.

[Second Embodiment]

In the second embodiment according to the present invention, the proposed configuration generation unit included in the proposal device can more efficiently obtain the dimensions of the heating element in the configuration of the thermally conductive member in the comparative model so that the thermal resistance of the heating element in the comparative model becomes equivalent to the thermal resistance of the reference model.

<Processing Procedure of Proposed Configuration Generation Unit>

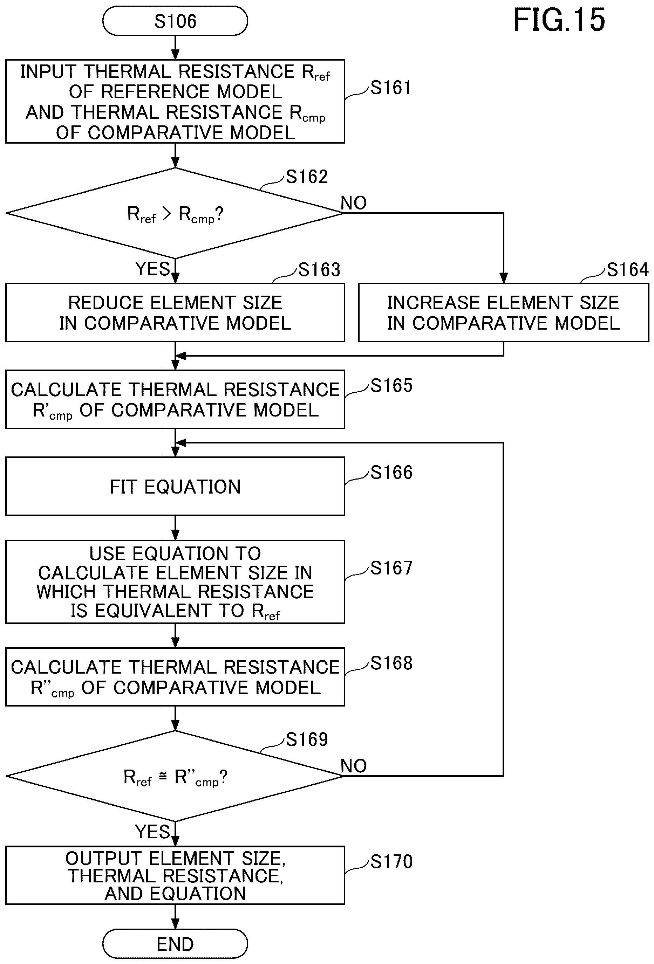

The processing procedure of the proposed configuration generation unit according to the embodiment will be described. FIG. 15 is a flowchart illustrating an example of the processing procedure of the proposed configuration generation unit 106 according to the embodiment.

In step S161, the proposed configuration generation unit 106 receives a thermal resistance $R_{ref}$ based on the reference model from the reference performance calculation unit 104. The proposed configuration generation unit 106 receives a thermal resistance $R_{cmp}$ based on the comparative model from the comparative performance calculation unit 105.

In step S162, the proposed configuration generation unit 106 compares $R_{ref}$ and $R_{cmp}$, and determines whether the thermal resistance $R_{ref}$ is greater than the thermal resistance $R_{cmp}$ ($R_{ref} > R_{cmp}$). In a case where the thermal resistance $R_{ref}$ is greater than the thermal resistance $R_{cmp}$ (YES), the proposed configuration generation unit 106 advances the process to step S163. In a case where the thermal resistance $R_{ref}$ is less than or equal to the thermal resistance $R_{cmp}$ (NO), the proposed configuration generation unit 106 advances the process to step S164.

In step S163, the proposed configuration generation unit 106 reduces the dimensions of the heating element in the comparative model. For example, the proposed configuration generation unit 106 multiplies the length and the width of the heating element of the comparative model by a coefficient that is less than 1.

In step S164, the proposed configuration generation unit 106 increases the dimensions of the heating element in the comparative model. For example, the proposed configuration generation unit 106 multiplies the length and the width of the heating element of the comparative model by a coefficient that is greater than 1.

In step S165, the proposed configuration generation unit 106 calculates a thermal resistance $R'_{cmp}$ based on the comparative model in which the dimensions of the heating element have been changed in step S163 or step S164. The method of calculating the thermal resistance is the same as the method employed by the reference performance calculation unit 104 and the comparative performance calculation unit 105.

In step S166, the proposed configuration generation unit 106 uses the thermal resistance $R_{cmp}$ and the thermal resistance $R'_{cmp}$ to fit an equation relating a heating area to the thermal resistance.

For example, letting $R_{th}$ be the thermal resistance, S be the heating area, and a and b be the fitting parameters, the equation relating the heating area to the thermal resistance is defined as follows.

$$\log(R_{th}) = a + b*\log(S)$$

In step S167, the proposed configuration generation unit 106 uses the equation fitted in step S166 to obtain an heating area S' that corresponds to the thermal resistance $R_{th}$. The proposed configuration generation unit 106 also changes the dimensions (element size) of the heating element in the comparative model so as to make the dimensions correspond to the heating area S'. For example, in a case where the length and width dimensions of the heating element are equal to each other, the square root ($\sqrt{S'}$) of the heating area S' can be set as the length and width dimensions of the heating element.

In step S168, the proposed configuration generation unit 106 calculates a thermal resistance $R''_{cmp}$ based on the comparative model in which the dimensions of the heating element have been changed in step S167. The method of calculating the thermal resistance is the same as the method employed in step S165.

In step S169, the proposed configuration generation unit 106 compares the thermal resistance $R_{ref}$ and the thermal resistance $R''_{cmp}$, and determines whether the value of the thermal resistance $R_{ref}$ and the value of the thermal resistance $R''_{cmp}$ are close ($R_{ref} = R''_{cmp}$). In a case where the value of the thermal resistance $R_{ref}$ and the value of the thermal resistance $R''_{cmp}$ are close (YES), the proposed configuration generation unit 106 advances the process to step S170. In a case where the value of the thermal resistance $R_{ref}$ and the value of the thermal resistance $R''_{cmp}$ are not close (NO), the proposed configuration generation unit 106 returns the process to step S166 and executes the process again from step S166 to step S169. When the equation is fitted in step S166, however, the thermal resistance $R''_{cmp}$ is used in addition to the thermal resistance $R_{cmp}$ and the thermal resistance $R'_{cmp}$.

In step S170, the proposed configuration generation unit 106 generates the comparative model in which the dimensions of the heating element have been changed as the proposed model, and outputs the dimensions (element size) of the heating element of the proposed model, the thermal resistance based on the proposed model, and the fitted equation.

In the proposed information display unit 2300 of the proposal screen 2000 illustrated in FIG. 6, a graph in which the fitted equation and the respective heating areas and thermal resistances of the reference model, the comparative model, and the proposed model have been plotted is displayed in the graph display field 2304. In the graph illustrated in FIG. 6, ● indicates the relationship between the heating area and the thermal resistance based on the reference model, ○ indicates the relationship between the heating area and the thermal resistance based on the comparative model, and ♦ indicates the relationship between the heating area and the thermal resistance based on the proposed model.

Comparing the reference model ● and the comparative model O, it can be seen that the thermal resistance decreases when the dimensions of the heating element are same. Comparing the reference model ● and the proposed model ♦, it can be seen that dimensions of the heating element can be reduced when the thermal resistances are same. By observing such a graph, the user can intuitively grasp the relationship between the size of the heating element and the thermal resistance. Furthermore, the relationship between the size of the heating element and the thermal resistance can be compared easily between a plurality of different comparative models.

<Analysis Result>

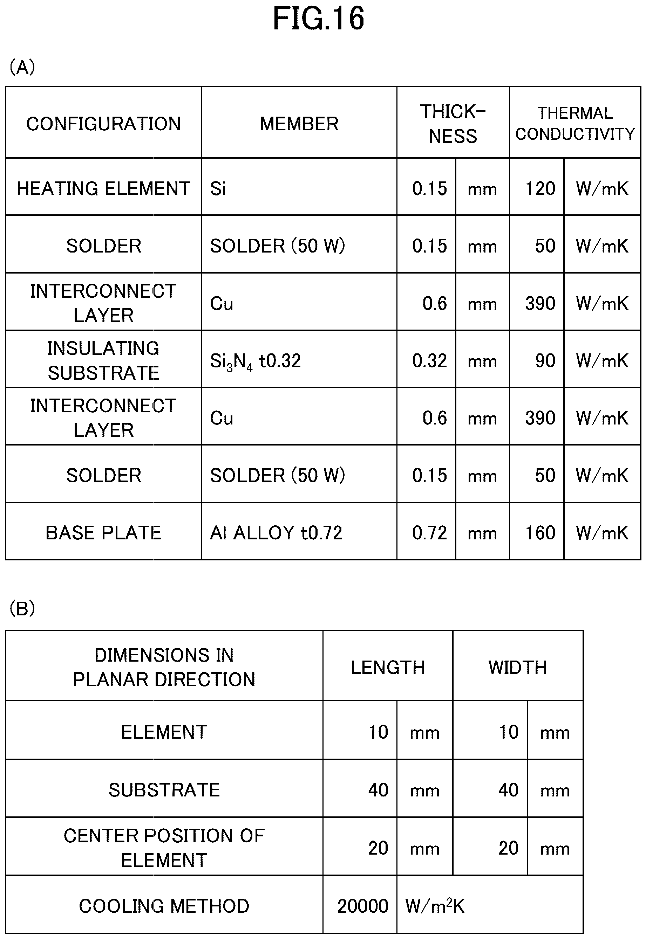

The analysis results of the validity of the equation relating the heating area to the thermal resistance according to the embodiment will be described with reference to FIGS. 16 to 18.

FIG. 16 is a view illustrating the configuration of the reference model used in the analysis. The table of FIG. 16(A) indicates the material, the thickness, and the thermal conductivity of each layer in the reference model. FIG. 16(B) indicates the dimensions, the layout, and cooling method of each layer in the reference model used in the analysis.

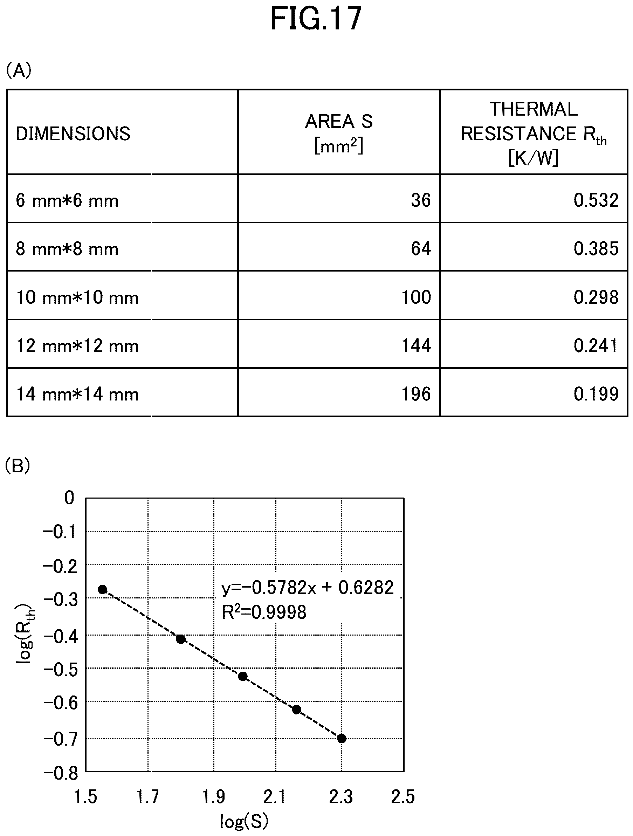

FIG. 17(A) indicates the result of changing the dimensions of the heating element having an aspect ratio of 1:1 in the reference model illustrated in FIG. 16 and obtaining the relationship between the heating area and the thermal resistance. FIG. 17(B) is a graph illustrating the relationship between the heating area and the thermal resistance indicated in FIG. 17(A).

As illustrated in FIG. 17, the relationship between the heating area and the thermal resistance when the dimensions of the heating element having an aspect ratio of 1:1 are changed lies on a straight line of y = -0.5782x + 0.6282 in a case where the logarithm of the heating area is taken on the x-axis and the logarithm of the thermal resistance is taken on the y-axis. That is, the fitting parameters can be fitted to the equation $\log(R_{th}) = a + b*\log(S)$ where $a = -0.5782$ and $b = 0.6282$.

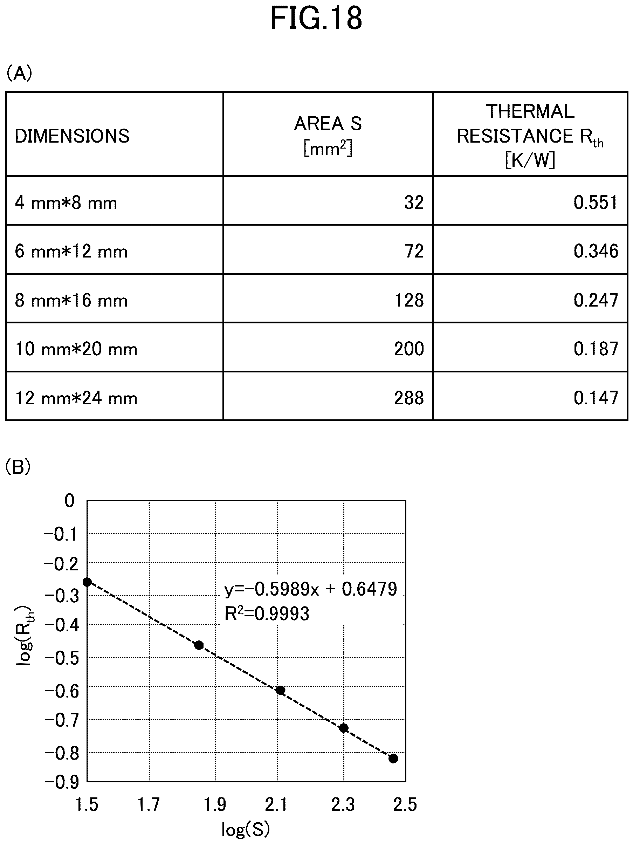

FIG. 18(A) indicates the result of changing the dimensions of the heating element having an aspect ratio of 1:2 in the reference model illustrated in FIG. 16 and obtaining the relationship between the heating area and the thermal resistance. FIG. 18(B) is a graph illustrating the relationship between the heating area and the thermal resistance indicated in FIG. 18(A).

As illustrated in FIG. 18, the relationship between the heating area and the thermal resistance when the dimensions of the heating element having an aspect ratio of 1:2 are changed lies on a straight line of y = -0.5989x + 0.6479 in a case where the logarithm of the heating area is taken on the x-axis and the logarithm of the thermal resistance is taken on the y-axis. That is, the fitting parameters can be fitted to the equation $\log(R_{th}) = a + b*\log(S)$ where $a = -0.5989$ and $b = 0.6479$.

<Search Efficiency>

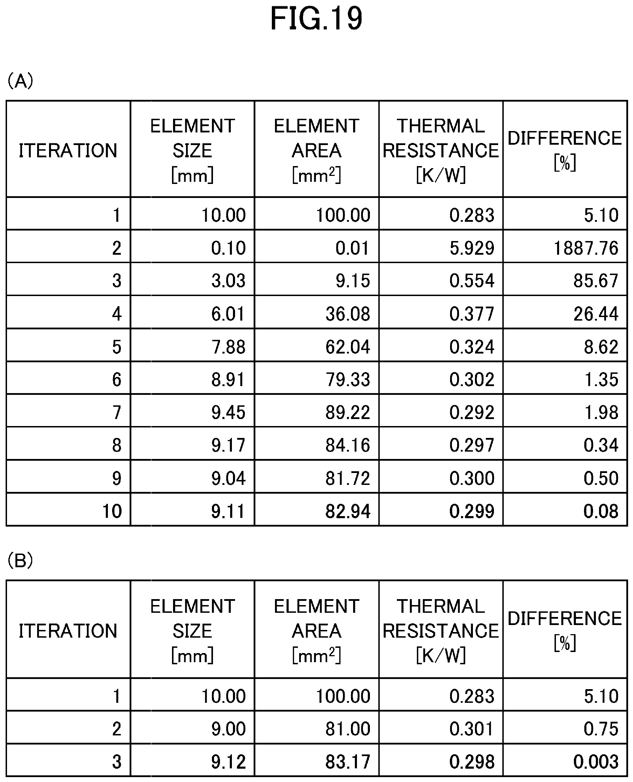

The search efficiency in a case where the dimensions of the heating element are obtained based on the processing procedure of the proposed configuration generation unit according to the embodiment will be described with reference to FIG. 19.

FIG. 19(A) is a table illustrating the result of using the bisection method to obtain the dimensions of the heating element. The bisection method is a root-finding algorithm that solves an equation by repeating an operation for finding an intermediate point of a section including a solution. FIG. 19(A) indicates the results obtained after repeatedly changing the element size and calculating the thermal resistance until the difference between the respective thermal resistances of the reference model and the comparative model becomes 0.1% with the interval of 0.1 to 1 as an initial condition.

FIG. 19(B) is a table illustrating the result of obtaining the element size of the heating element based on the processing procedure of the proposed configuration generation unit according to the embodiment. FIG. 19(B) indicates the results obtained by repeatedly changing the element size and calculating the resistance upon making setting so that the thermal resistance $R_{ref}$ and the thermal resistance $R''_{cmp}$ will be determined to be equivalent to each other when the difference between the thermal resistance $R_{ref}$ and the thermal resistance $R''_{cmp}$ is 0.1% or less in the process of step S169 of FIG. 15.

As illustrated in FIG. 19, using the bisection method required the calculation of the thermal resistance to be iterated ten times. In the case of the processing procedure of the proposed configuration generation unit of the embodiment, it can be seen that the calculation of the thermal resistance was iterated three times. Therefore, in the processing procedure of the proposed configuration generation unit according to the embodiment, it can be seen that the search efficiency is significantly improved as compared with the conventional art.

<Effects of Second Embodiment>

In the proposed configuration generation unit according to the embodiment, the equation relating the heating area to the thermal resistance is fitted to obtain the dimensions of the heating element, in which the thermal resistance becomes equivalent to the thermal resistance of the reference model, in the configuration of the thermally conductive member of the comparative model. Using the equation relating the heating area to the thermal resistance allows an inverse problem to be solved. Hence, it will be possible to efficiently and quickly obtain the dimensions of the heating element in which the thermal resistance becomes equivalent to the thermal resistance of the reference model.

[Supplement]

In the above-described embodiments, the process of step S104 executed by the reference performance calculation unit 104 is an example of a reference performance calculation procedure. The process of step S105 executed by the comparative performance calculation unit 105 is an example of the comparative performance calculation procedure. The process of step S106 executed by the proposed configuration generation unit 106 is an example of the proposed configuration generation procedure. The process of step S203 executed by the result display unit 203 is an example of the result output procedure.

Although the embodiments of the present invention have been described in detail above, the present invention is not limited to these embodiments, and various modifications and substitutions can be made without departing from the scope of the appended claims.

This application is based on and claims priority to Japanese Patent Application No. 2021-181661, filed in Japan Patent Office on November 8, 2021, the entire contents of which are incorporated herein by reference.

DESCRIPTION OF THE REFERENCE NUMERALS

1 proposal device
2 user terminal
9 communication network
10 proposal system
100 member information storage unit
101 reference configuration reception unit
102 comparative configuration reception unit
103 member information acquisition unit
104 reference performance calculation unit
105 comparative performance calculation unit
106 proposed configuration generation unit
107 result output unit
201 reference configuration input unit
202 comparative configuration input unit
203 result display unit

**Claims**

1. A program for causing a computer to execute procedures comprising:

    a reference performance calculation procedure to calculate heat dissipation performance based on a reference model that represents a configuration of a semiconductor device in which a multi-layered thermally conductive member includes a heating element;
    a comparative performance calculation procedure to calculate heat dissipation performance based on a comparative model in which a configuration related to the thermally conductive member of the reference model has been changed;
    a proposed configuration generation procedure to generate a proposed model in which a configuration related to the heating element of the comparative model is changed such that the heat dissipation performance based on the comparative model is equivalent to the heat dissipation performance based on the reference model; and
    a result output procedure to output information based on the proposed model.

2. The program according to claim 1, wherein the configuration of the semiconductor device includes dimensions, a material, and a position of the heating element and dimensions, a material, and a position of each layer of the thermally conductive member.

3. The program according to claim 2, wherein in the proposed configuration generation procedure, the dimensions of the heating element of the comparative model are changed to generate the proposed model.

4. The program according to claim 3, wherein in the result output procedure, the dimensions of the heating element of the proposed model are output.

5. The program according to claim 3, wherein in the result output procedure, a cost of the semiconductor device calculated based on the proposed model is output.

6. The program according to claim 3, wherein the heat dissipation performance includes a thermal resistance,
    wherein in the proposed configuration generation procedure, the proposed model is generated by repeatedly

        fitting an equation relating a heating area to the thermal resistance, the fitting being performed using a thermal resistance before the dimensions of the heating element are changed in the comparative model and a thermal resistance after the dimensions of the heating element are changed in the comparative model,
        using the fitted equation to calculate a heating area corresponding to the thermal resistance based on the reference model, and
        changing, based on the heating area calculated using the equation, the dimensions of the heating element of the comparative model.

7. The program according to claim 6, wherein the equation is expressed by

$$\log(R_{th}) = a + b*\log(S)$$

where $R_{th}$ is the thermal resistance, S is the heating area, and a and b are fitting parameters.

8. The program according to claim 7, wherein in the result output procedure, the thermal resistance based on the reference model, the thermal resistance in the comparative model, and the thermal resistance based on the proposed model are output together with the fitted equation.

9. A proposal device comprising:

a reference performance calculation unit configured to calculate heat dissipation performance based on a reference model that represents a configuration of a semiconductor device in which a multi-layered thermally conductive member includes a heating element;
a comparative performance calculation unit configured to calculate heat dissipation performance based on a comparative model in which a configuration related to the thermally conductive member of the reference model has been changed;
a proposed configuration generation unit configured to generate a proposed model in which a configuration related to the heating element of the comparative model is changed such that the heat dissipation performance based on the comparative model is equivalent to the heat dissipation performance based on the reference model; and
a result output unit configured to output information based on the proposed model.

10. A computer-implemented proposal method comprising:

a reference performance calculation procedure to calculate heat dissipation performance based on a reference model that represents a configuration of a semiconductor device in which a multi-layered thermally conductive member includes a heating element;
a comparative performance calculation procedure to calculate heat dissipation performance based on a comparative model in which a configuration related to the thermally conductive member of the reference model has been changed;
a proposed configuration generation procedure to generate a proposed model in which a configuration related to the heating element of the comparative model is changed such that the heat dissipation performance based on the comparative model is equivalent to the heat dissipation performance based on the reference model; and
a result output procedure to output information based on the proposed model.

# FIG.1

# FIG.2

CPU 501
ROM 502
RAM 503
HDD 504

509

INPUT DEVICE 505
DISPLAY DEVICE 506
COMMUNICATION I/F 507
EXTERNAL I/F 508

500

COMMUNICATION NETWORK

DRIVE DEVICE 510

511

EP 4 432 154 A1

FIG.3

PROPOSAL DEVICE 1

REFERENCE CONFIGURATION RECEPTION UNIT 101

MEMBER INFORMATION STORAGE UNIT 100

COMPARATIVE CONFIGURATION RECEPTION UNIT 102

REFERENCE PERFORMANCE CALCULATION UNIT 104

MEMBER INFORMATION ACQUISITION UNIT 103

COMPARATIVE PERFORMANCE CALCULATION UNIT 105

PROPOSED CONFIGURATION GENERATION UNIT 106

RESULT OUTPUT UNIT 107

USER TERMINAL 2

REFERENCE CONFIGURATION INPUT UNIT 201

COMPARATIVE CONFIGURATION INPUT UNIT 202

RESULT DISPLAY UNIT 203

FIG.4

PROPOSAL DEVICE — 1

REFERENCE CONFIGURATION INPUT UNIT — 201

MEMBER INFORMATION STORAGE UNIT — 100

COMPARATIVE CONFIGURATION INPUT UNIT — 202

RESULT DISPLAY UNIT — 203

REFERENCE PERFORMANCE CALCULATION UNIT — 104

MEMBER INFORMATION ACQUISITION UNIT — 103

COMPARATIVE PERFORMANCE CALCULATION UNIT — 105

PROPOSED CONFIGURATION GENERATION UNIT — 106

# FIG.5

**2** USER TERMINAL

**1** PROPOSAL DEVICE

S200
DISPLAY
PROPOSAL SCREEN

S201
INPUT
REFERENCE MODEL

S101
RECEIVE REFERENCE MODEL

S202
INPUT
COMPARATIVE MODEL

S102
RECEIVE COMPARATIVE MODEL

S103
READ MEMBER INFORMATION

S104
CALCULATE HEAT DISSIPATION
PERFORMANCE OF REFERENCE MODEL

S105
CALCULATE HEAT DISSIPATION
PERFORMANCE OF
COMPARATIVE MODEL

S106
GENERATE PROPOSED MODEL

S203
DISPLAY RESULT

S107
OUTPUT RESULT

END

END

# FIG.6

**2000**

## (1) CALCULATION OF THERMAL RESISTANCE OF REFERENCE MODEL — 2100

**2101**

| CONFIGURA-TION A | MEMBER | THICK-NESS | | THERMAL CON-DUCTIVITY | |
|---|---|---|---|---|---|
| HEATING ELEMENT | Si (10 mm* 10 mm) | 0.15 | mm | 120 | W/mK |
| SOLDER | SOLDER (50 W) | 0.15 | mm | 50 | W/mK |
| INTERCONNECT LAYER | Al | 0.6 | mm | 240 | W/mK |
| INSULATING SUBSTRATE | Al2O3 t0.635 | 0.635 | mm | 30 | W/mK |
| INTERCONNECT LAYER | Al | 0.6 | mm | 240 | W/mK |
| SOLDER | SOLDER (50 W) | 0.15 | mm | 50 | W/mK |
| BASE PLATE | Al ALLOY t0.72 | 0.72 | mm | 160 | W/mK |
| | | | | | |
| | | | | | |

**2102**

| DIMENSIONS IN PLANAR DIRECTION (●) | LENGTH | | WIDTH | |
|---|---|---|---|---|
| ELEMENT | 10 | mm | 10 | mm |
| SUBSTRATE | 40 | mm | 40 | mm |
| CENTER POSITION OF ELEMENT | 20 | mm | 20 | mm |

COOLING METHOD  ⦿ FORCED WATER COOLING   ◯ FORCED AIR COOLING

| CALCULATE THERMAL RESISTANCE — 2103 | TOTAL THERMAL RESISTANCE | 0.460 | K/W — 2104 |
|---|---|---|---|

## (2) CALCULATION OF THERMAL RESISTANCE OF COMPARATIVE MODEL — 2200

**2201**

| CONFIGURA-TION B | MEMBER | THICK-NESS | | THERMAL CON-DUCTIVITY | |
|---|---|---|---|---|---|
| HEATING ELEMENT | Si (10 mm* 10 mm) | 0.15 | mm | 120 | W/mK |
| SOLDER | SOLDER (50 W) | 0.15 | mm | 50 | W/mK |
| INTERCONNECT LAYER | Al | 0.6 | mm | 240 | W/mK |
| INSULATING SUBSTRATE | Al2O3 t0.32 | 0.32 | mm | 30 | W/mK |
| INTERCONNECT LAYER | Al | 0.6 | mm | 240 | W/mK |
| SOLDER | SOLDER (50 W) | 0.15 | mm | 50 | W/mK |
| BASE PLATE | Al ALLOY t0.72 | 0.72 | mm | 160 | W/mK |
| | | | | | |
| | | | | | |

**2202**

| DIMENSIONS IN PLANAR DIRECTION (◯) | LENGTH | | WIDTH | |
|---|---|---|---|---|
| ELEMENT | 10 | mm | 10 | mm |
| SUBSTRATE | 40 | mm | 40 | mm |
| CENTER POSITION OF ELEMENT | 20 | mm | 20 | mm |

COOLING METHOD  ⦿ FORCED WATER COOLING   ◯ FORCED AIR COOLING

| CALCULATE ELEMENT AREA — 2203 | TOTAL THERMAL RESISTANCE | 0.408 | K/W — 2204 |
|---|---|---|---|

**2300**

**2304**

| DIMENSIONS IN PLANAR DIRECTION (◆) — 2301 | LENGTH | | WIDTH | |
|---|---|---|---|---|
| ELEMENT | 9.09 | mm | 9.09 | mm |
| SUBSTRATE | 40 | mm | 40 | mm |
| CENTER POSITION OF ELEMENT | 20 | mm | 20 | mm |

| ELEMENT AREA RATIO | 82.7 | % — 2303 |
|---|---|---|

| TOTAL THERMAL RESISTANCE | 0.460 | K/W — 2302 |
|---|---|---|

EP 4 432 154 A1

# FIG.7

EP 4 432 154 A1

FIG.8

# FIG.9

1010 SEMICONDUCTOR DEVICE (COMPARATIVE MODEL)

1100 HEATING ELEMENT

0.15 mm — 1210 BONDING LAYER (SOLDER)

0.15 mm

0.6 mm — 1220 INTERCONNECT LAYER (ALUMINUM)

0.32 mm — 1230 INSULATING SUBSTRATE (THIN ALUMINA)

0.6 mm — 1240 INTERCONNECT LAYER (ALUMINUM)

0.15 mm — 1250 BONDING LAYER (SOLDER)

0.72 mm — 1260 BASE PLATE (Al ALLOY)

EP 4 432 154 A1

# FIG.10

1020 SEMICONDUCTOR DEVICE (COMPARATIVE MODEL)

1100 HEATING ELEMENT

0.15 mm

1210 BONDING LAYER (SOLDER)

0.15 mm

0.6 mm — 1220 INTERCONNECT LAYER (ALUMINUM)

0.635 mm — 1230 INSULATING SUBSTRATE (ALUMINUM NITRIDE)

0.6 mm — 1240 INTERCONNECT LAYER (ALUMINUM)

0.15 mm — 1250 BONDING LAYER (SOLDER)

0.72 mm — 1260 BASE PLATE (Al ALLOY)

EP 4 432 154 A1

# FIG.11

EP 4 432 154 A1

## (1) CALCULATION OF THERMAL RESISTANCE OF REFERENCE MODEL

| CONFIGURA-TION A | MEMBER | THICK-NESS | | THERMAL CON-DUCTIVITY | |
|---|---|---|---|---|---|
| HEATING ELEMENT | Si (10 mm* 10 mm) | 0.15 | mm | 120 | W/mK |
| SOLDER | SOLDER (50 W) | 0.15 | mm | 50 | W/mK |
| INTERCONNECT LAYER | Al | 0.6 | mm | 240 | W/mK |
| INSULATING SUBSTRATE | Al2O3 t0.635 | 0.635 | mm | 30 | W/mK |
| INTERCONNECT LAYER | Al | 0.6 | mm | 240 | W/mK |
| SOLDER | SOLDER (50 W) | 0.15 | mm | 50 | W/mK |
| BASE PLATE | Al ALLOY t0.72 | 0.72 | mm | 160 | W/mK |
| | | | | | |
| | | | | | |

| DIMENSIONS IN PLANAR DIRECTION (●) | LENGTH | | WIDTH | |
|---|---|---|---|---|
| ELEMENT | 10 | mm | 10 | mm |
| SUBSTRATE | 40 | mm | 40 | mm |
| CENTER POSITION OF ELEMENT | 20 | mm | 20 | mm |

COOLING METHOD  ● FORCED AIR COOLING  ○ FORCED AIR COOLING

| CALCULATE THERMAL RESISTANCE | TOTAL THERMAL RESISTANCE | 0.460 | K/W |
|---|---|---|---|

## (2) CALCULATION OF THERMAL RESISTANCE OF COMPARATIVE MODEL

| CONFIGURA-TION B | MEMBER | THICK-NESS | | THERMAL CON-DUCTIVITY | |
|---|---|---|---|---|---|
| HEATING ELEMENT | Si (10 mm* 10 mm) | 0.15 | mm | 120 | W/mK |
| SOLDER | SOLDER (50 W) | 0.15 | mm | 50 | W/mK |
| INTERCONNECT LAYER | Al | 0.6 | mm | 240 | W/mK |
| INSULATING SUBSTRATE | AlN t0.635 | 0.635 | mm | 150 | W/mK |
| INTERCONNECT LAYER | Al | 0.6 | mm | 240 | W/mK |
| SOLDER | SOLDER (50 W) | 0.15 | mm | 50 | W/mK |
| BASE PLATE | Al ALLOY t0.72 | 0.72 | mm | 160 | W/mK |
| | | | | | |
| | | | | | |

| DIMENSIONS IN PLANAR DIRECTION (○) | LENGTH | | WIDTH | |
|---|---|---|---|---|
| ELEMENT | 10 | mm | 10 | mm |
| SUBSTRATE | 40 | mm | 40 | mm |
| CENTER POSITION OF ELEMENT | 20 | mm | 20 | mm |

COOLING METHOD  ● FORCED AIR COOLING  ○ FORCED AIR COOLING

| CALCULATE ELEMENT AREA | TOTAL THERMAL RESISTANCE | 0.342 | K/W |
|---|---|---|---|

THERMAL RESISTANCE [K/W] vs RELATIVE ELEMENT AREA

| DIMENSIONS IN PLANAR DIRECTION (◆) | LENGTH | | WIDTH | |
|---|---|---|---|---|
| ELEMENT | 7.79 | mm | 7.79 | mm |
| SUBSTRATE | 40 | mm | 40 | mm |
| CENTER POSITION OF ELEMENT | 20 | mm | 20 | mm |

| ELEMENT AREA RATIO | 60.7 | % |
|---|---|---|

| TOTAL THERMAL RESISTANCE | 0.460 | K/W |
|---|---|---|

# FIG.12

| TYPE | MEMBER NAME | THICK-NESS [mm] | THERMAL CONDUC-TIVITY [W/mK] | COST | PRODUCT NUMBER | ... |
|---|---|---|---|---|---|---|
| INSULATING SUBSTRATE | AlN t0.635 | 0.635 | 180 | ***** | INSULATING SUBSTRATE A | |
| | AlN t0.32 | 0.32 | 180 | ***** | INSULATING SUBSTRATE B | |
| | AlN t0.25 | 0.25 | 180 | ***** | INSULATING SUBSTRATE C | |
| | $Si_3N_4$ t0.635 | 0.635 | 90 | ***** | INSULATING SUBSTRATE D | |
| | $Si_3N_4$ t0.32 | 0.32 | 90 | ***** | INSULATING SUBSTRATE E | |
| | $Si_3N_4$ t0.25 | 0.25 | 90 | ***** | INSULATING SUBSTRATE F | |
| | $Al_2O_3$ t0.635 | 0.635 | 30 | ***** | INSULATING SUBSTRATE G | |
| | $Al_2O_3$ t0.32 | 0.32 | 30 | ***** | INSULATING SUBSTRATE H | |
| | $Al_2O_3$ t0.25 | 0.25 | 30 | ***** | INSULATING SUBSTRATE I | |
| INTER-CONNECT LAYER | Al t0.6 | 0.6 | 240 | ***** | INTER-CONNECT LAYER A | |
| | Cu t0.6 | 0.6 | 390 | ***** | INTER-CONNECT LAYER B | |

# FIG.13

| TYPE | MEMBER NAME | THICK-NESS [mm] | THERMAL CONDUC-TIVITY [W/mK] | COST | PRODUCT NUMBER | . . . |
|---|---|---|---|---|---|---|
| INTER-CONNECT LAYER | Al t0.6 | 0.6 | 240 | ***** | | |
| INSULATING SUBSTRATE | AIN t0.32 | 0.32 | 180 | ***** | PRODUCT A | |
| INTER-CONNECT LAYER | Al t0.6 | 0.6 | 240 | ***** | | |
| INTER-CONNECT LAYER | Cu t0.3 | 0.3 | 390 | ***** | | |
| INSULATING SUBSTRATE | $Si_3N_4$ t0.32 | 0.32 | 90 | ***** | PRODUCT B | |
| INTER-CONNECT LAYER | Cu t0.3 | 0.3 | 390 | ***** | | |

# FIG.14

| TYPE | MEMBER NAME | THERMAL CONDUCTIVITY [W/mK] | COST | ... |
|---|---|---|---|---|
| INSULATING SUBSTRATE | AlN | 180 | ***** | |
| INSULATING SUBSTRATE | $Si_3N_4$ | 90 | ***** | |
| INSULATING SUBSTRATE | $Al_2O_3$ | 30 | ***** | |
| INTERCONNECT LAYER | Al | 240 | ***** | |
| INTERCONNECT LAYER | Cu | 390 | ***** | |

# FIG.15

```
                    ( S106 )
                        │
                        ▼
┌─────────────────────────────────────┐
│ INPUT THERMAL RESISTANCE R_ref       │
│ OF REFERENCE MODEL                   │──S161
│ AND THERMAL RESISTANCE R_cmp         │
│ OF COMPARATIVE MODEL                 │
└─────────────────────────────────────┘
                        │
                        ▼
                   ╱─────────╲  S162
                  ╱ R_ref >    ╲        NO
                 ╱  R_cmp ?     ╲──────────────┐
                  ╲            ╱                │
                   ╲─────────╱                 │
                   YES│                         │
                      ▼                          ▼
┌──────────────────────────┐   ┌──────────────────────────┐
│ REDUCE ELEMENT SIZE      │   │ INCREASE ELEMENT SIZE    │
│ IN COMPARATIVE MODEL     │   │ IN COMPARATIVE MODEL     │
│                    S163  │   │                    S164  │
└──────────────────────────┘   └──────────────────────────┘
```

$R_{ref} > R_{cmp}?$  — S162

REDUCE ELEMENT SIZE IN COMPARATIVE MODEL — S163

INCREASE ELEMENT SIZE IN COMPARATIVE MODEL — S164

CALCULATE THERMAL RESISTANCE $R'_{cmp}$ OF COMPARATIVE MODEL — S165

FIT EQUATION — S166

USE EQUATION TO CALCULATE ELEMENT SIZE IN WHICH THERMAL RESISTANCE IS EQUIVALENT TO $R_{ref}$ — S167

CALCULATE THERMAL RESISTANCE $R''_{cmp}$ OF COMPARATIVE MODEL — S168

$R_{ref} \cong R''_{cmp}?$ — S169 — NO

OUTPUT ELEMENT SIZE, THERMAL RESISTANCE, AND EQUATION — S170

( END )

# FIG.16

(A)

| CONFIGURATION | MEMBER | THICK-NESS | | THERMAL CONDUCTIVITY | |
|---|---|---|---|---|---|
| HEATING ELEMENT | Si | 0.15 | mm | 120 | W/mK |
| SOLDER | SOLDER (50 W) | 0.15 | mm | 50 | W/mK |
| INTERCONNECT LAYER | Cu | 0.6 | mm | 390 | W/mK |
| INSULATING SUBSTRATE | $Si_3N_4$ t0.32 | 0.32 | mm | 90 | W/mK |
| INTERCONNECT LAYER | Cu | 0.6 | mm | 390 | W/mK |
| SOLDER | SOLDER (50 W) | 0.15 | mm | 50 | W/mK |
| BASE PLATE | Al ALLOY t0.72 | 0.72 | mm | 160 | W/mK |

(B)

| DIMENSIONS IN PLANAR DIRECTION | LENGTH | | WIDTH | |
|---|---|---|---|---|
| ELEMENT | 10 | mm | 10 | mm |
| SUBSTRATE | 40 | mm | 40 | mm |
| CENTER POSITION OF ELEMENT | 20 | mm | 20 | mm |
| COOLING METHOD | 20000 | $W/m^2K$ | | |

# FIG.17

(A)

| DIMENSIONS | AREA S [mm²] | THERMAL RESISTANCE $R_{th}$ [K/W] |
|---|---:|---:|
| 6 mm*6 mm | 36 | 0.532 |
| 8 mm*8 mm | 64 | 0.385 |
| 10 mm*10 mm | 100 | 0.298 |
| 12 mm*12 mm | 144 | 0.241 |
| 14 mm*14 mm | 196 | 0.199 |

(B)

y=−0.5782x + 0.6282
$R^2$=0.9998

# FIG.18

(A)

| DIMENSIONS | AREA S [mm$^2$] | THERMAL RESISTANCE R$_{th}$ [K/W] |
|---|---|---|
| 4 mm*8 mm | 32 | 0.551 |
| 6 mm*12 mm | 72 | 0.346 |
| 8 mm*16 mm | 128 | 0.247 |
| 10 mm*20 mm | 200 | 0.187 |
| 12 mm*24 mm | 288 | 0.147 |

(B)

$y = -0.5989x + 0.6479$
$R^2 = 0.9993$

# FIG.19

(A)

| ITERATION | ELEMENT SIZE [mm] | ELEMENT AREA [mm²] | THERMAL RESISTANCE [K/W] | DIFFERENCE [%] |
|---|---|---|---|---|
| 1 | 10.00 | 100.00 | 0.283 | 5.10 |
| 2 | 0.10 | 0.01 | 5.929 | 1887.76 |
| 3 | 3.03 | 9.15 | 0.554 | 85.67 |
| 4 | 6.01 | 36.08 | 0.377 | 26.44 |
| 5 | 7.88 | 62.04 | 0.324 | 8.62 |
| 6 | 8.91 | 79.33 | 0.302 | 1.35 |
| 7 | 9.45 | 89.22 | 0.292 | 1.98 |
| 8 | 9.17 | 84.16 | 0.297 | 0.34 |
| 9 | 9.04 | 81.72 | 0.300 | 0.50 |
| 10 | 9.11 | 82.94 | 0.299 | 0.08 |

(B)

| ITERATION | ELEMENT SIZE [mm] | ELEMENT AREA [mm²] | THERMAL RESISTANCE [K/W] | DIFFERENCE [%] |
|---|---|---|---|---|
| 1 | 10.00 | 100.00 | 0.283 | 5.10 |
| 2 | 9.00 | 81.00 | 0.301 | 0.75 |
| 3 | 9.12 | 83.17 | 0.298 | 0.003 |

**INTERNATIONAL SEARCH REPORT**

| International application No. |
|---|
| **PCT/JP2022/041272** |

**A.    CLASSIFICATION OF SUBJECT MATTER**

*G06F 30/20*(2020.01)i; *G01N 25/18*(2006.01)i; *G06F 30/10*(2020.01)i; *H01L 23/12*(2006.01)i; *H01L 23/36*(2006.01)i;
*G06F 119/08*(2020.01)n
FI:    G06F30/20; H01L23/36 C; H01L23/12 J; G06F30/10 100; G01N25/18 D; G01N25/18 L; G06F119:08

According to International Patent Classification (IPC) or to both national classification and IPC

**B.    FIELDS SEARCHED**

Minimum documentation searched (classification system followed by classification symbols)

G06F30/20; G01N25/18; G06F30/10; H01L23/12; H01L23/36; G06F119/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2009-301444 A (SHARP CORP) 24 December 2009 (2009-12-24)<br>paragraphs [0077]-[0125], fig. 1-16 | 1-10 |
| A | JP 2009-176050 A (FUJITSU LTD) 06 August 2009 (2009-08-06)<br>paragraphs [0011]-[0093], fig. 1-19 | 1-10 |
| A | JP 2009-48505 A (SHARP CORP) 05 March 2009 (2009-03-05)<br>entire text, all drawings | 1-10 |
| A | WO 2010/058507 A1 (NEC CORPORATION) 27 May 2010 (2010-05-27)<br>entire text, all drawings | 1-10 |
| A | JP 2008-102631 A (MATSUSHITA ELECTRIC IND CO LTD) 01 May 2008 (2008-05-01)<br>entire text, all drawings | 1-10 |
| A | JP 2016-127279 A (TOSHIBA CORP) 11 July 2016 (2016-07-11)<br>entire text, all drawings | 1-10 |

☐ Further documents are listed in the continuation of Box C.          ☑ See patent family annex.

|  |  |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **02 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/041272**

| Patent document cited in search report | | | Publication date (day/month/year) | Patent family member(s) | | | Publication date (day/month/year) |
|---|---|---|---|---|---|---|---|
| JP | 2009-301444 | A | 24 December 2009 | (Family: none) | | | |
| JP | 2009-176050 | A | 06 August 2009 | US | 2009/0192959 | A1 | |
| | | | | paragraphs [0035]-[0118], fig. 1-19 | | | |
| | | | | EP | 2088524 | A1 | |
| | | | | CN | 101493849 | A | |
| | | | | KR | 10-2009-0082085 | A | |
| JP | 2009-48505 | A | 05 March 2009 | (Family: none) | | | |
| WO | 2010/058507 | A1 | 27 May 2010 | US | 2011/0224964 | A1 | |
| | | | | entire text, all drawings | | | |
| | | | | CN | 102224501 | A | |
| JP | 2008-102631 | A | 01 May 2008 | (Family: none) | | | |
| JP | 2016-127279 | A | 11 July 2016 | US | 2016/0190032 | A1 | |
| | | | | entire text, all drawings | | | |
| | | | | EP | 3038152 | A1 | |
| | | | | CN | 105742268 | A | |

## REFERENCES CITED IN THE DESCRIPTION

**Patent documents cited in the description**

- JP 2021181661 A

**Non-patent literature cited in the description**

- **K. R. CHOUDHURY ; D. J. ROGERS.** Transient Thermal Modeling of a Power Module: An N-Layer Fourier Approach. *IEEE Transactions on Power Electronics,* 2019, vol. 34 (2), 1500-1508